# EUROPEAN PATENT APPLICATION

(11) **EP 0 905 481 A1**
(43) Date of publication of application: **31.03.1999**
(21) Application number: 97908501.6
(22) Date of filing: 25.03.1997
(51) Int. Cl.: G01C 21/00, G07B 15/00, G08G 1/0969, G09B 29/10

(54) **NAVIGATION SYSTEM FOR VEHICLES**

(30) Priority: 14.06.1996 JP 153533/96
(71) Applicant: Toyota Jidosha Kabushiki Kaisha, Toyota-shi, Aichi-ken 471-71 (JP)
(72) Inventor: NOJIMA, Akihiko, Toyota-shi, Aichi-ken 471-71 (JP)
(74) Representative: Kügele, Bernhard
(86) International application number: JP9700977
(87) International publication number: WO9747948

(57) **Abstract**

When a vehicle passes a toll gate, a toll communication machine (20) communicates with the toll gate (24) and makes automatic toll payment. When the vehicle comes close to the toll gate (24), a navigation ECU (10) gives information on a lane on which automatic payment is to be made and a direction in which the vehicle is to advance thereafter through a loudspeaker (18).

## Description

### Technical Field

The present invention relates to a vehicle navigation apparatus which provides out a running guide to a vehicle, and more specifically, it relates to guidance when a vehicle passes through an automatic tollgate.

### Background Art

Heretofore, a navigation apparatus for displaying a present position and for guiding a route to a set destination has been known, and vehicles each carrying such a navigation apparatus have increased. Some vehicle roads are toll roads such as superhighways, and the entrances and exits to such toll roads are limited. Japanese Patent Laid-Open Publication No. Hei 6-36192 discloses detecting a toll road entrance line informing the operator of an exit interchange, and providing route guidance in the vicinity of the exit interchange at a timing different from that of running on a general road.

Furthermore, on the toll road, payment of a toll is necessary, and hence a toll collection gate is installed. Such a toll collection gate requires many workers, and can cause traffic backup. Accordingly, many automatic toll systems for levying the toll from the passing vehicle without the vehicle stopping have been proposed. For example, a system has been investigated in which a predetermined communication device is carried on the vehicle, and when the vehicle passes under the tollgate, the communication apparatus of the vehicle communicates with the tollgate to pay the toll from a previously determined bank account or the like. Such a system can reduce labor and remove a cause of traffic congestion and the like can be achieved. Accordingly, the automatic toll system of the toll road is considered very useful.

However, even if the automatic toll system is employed on the toll road, the reception of cash payment by hand cannot be completely eliminated. It can be assumed that it will take some time for the communication devices of the automatic toll system to become widespread, and until that time, it will be necessary to deal with vehicles on which such communication devices are not carried. Even after the communication devices become widespread, it will remain necessary to deal with vehicles in which the automatic toll collection cannot be carried out due to a trouble with the communication device. Accordingly, it can be considered that manned tollgates are unavoidable. It will therefore be necessary to inform operators which lane is the automatic toll lane.

Furthermore, in an automatic toll system, an exclusive system is required, and therefore the increase of vehicle costs cannot be avoided. A voice guide navigation apparatus for providing route guidance is also in use, but if the communication device for the automatic toll system is installed as an additional independent system in addition to the voice guide navigation apparatus, the cost to a vehicle user is further increased.

### Disclosure of Invention

The present invention has been developed in view of the above problems, and it is an object of the present invention to provide a vehicle navigation apparatus which can also provide suitable guidance for an automatic toll system.

According to one aspect of the present invention, there is provided a vehicle navigation apparatus for outputting a running direction guide regarding a guide point when the vehicle has approached a point where such guidance is necessary. This vehicle navigation apparatus comprises detecting means for detecting an approach to an automatic tollgate and the guide contents of the running direction guide are changed in accordance with an approach to the automatic tollgate.

Therefore, when the vehicle has approached the automatic tollgate, appropriate running direction information can be provided to a driver.

According to another aspect of the present invention, there is provided a vehicle navigation apparatus wherein the running direction guide is changed in accordance with whether or not automatic toll processing at an automatic tollgate can be applied to the vehicle. According to still another aspect of the present invention, there is provided a vehicle navigation apparatus wherein, when the automatic tollgate and a nonautomatic tollgate are adjacent to each other, guidance to a suitable direction or tollgate position for the vehicle is provided in accordance with whether or not automatic toll processing at the automatic tollgate can be applied to the vehicle.

When automatic tollgates and tollgates for payment by hand coexist, the running direction of the vehicle depends on whether or not the vehicle carries out automatic payment. According to the present invention, it can be judged which gate is selected, and the running direction is guided accordance with the judged result. Therefore, the vehicle can be guided to the appropriate gate by a device carried on the vehicle.

According to a further aspect of the present invention, there is provided a vehicle navigation apparatus which comprises automatic toll equipment applicable to the automatic toll processing at the automatic tollgate, and toll guide output means for outputting a toll guide necessary for the toll processing. This toll guide is changed in accordance with an approach to the automatic tollgate. By using the toll guide together with the toll information which is to be output at the automatic toll processing, more suitable guidance can be provided.

According to a further aspect of the present invention, there is provided a vehicle navigation apparatus which comprises voice navigation means for carrying out a voice guide including a scheduled running route of the vehicle and the running direction of the vehicle, toll processing information from the automatic toll equipment being output from the voice navigation means. Since a speaker for a voice output of the navigation apparatus carried on the vehicle can also be utilized to output information regarding the toll processing, the vehicle operator can receive the necessary information while driving. Furthermore, an exclusive output device for the toll information is not required.

According to a further aspect of the present invention, there is provided a vehicle navigation apparatus wherein a guide including the running direction after passing through the automatic tollgate is output. Vehicles to which automatic toll payment can be applied do not need to slow down for the tollgate. Accordingly, before and while the vehicle passes through a gate, a route selected for after the gate passage can be guided, enabling the driver's route selection to be suitably guided.

As described above, according to the present invention, since the guide is changed in accordance with the approach of the vehicle to the automatic tollgate, the driver can correctly judge whether he should steer the vehicle to the right or the left, or whether the present running lane is most desirable. Furthermore, when the toll information regarding the running is obtained at the search of the route or during the running of the vehicle, this toll information is output from the output means for the navigation. For example, when the route is searched, a driver can be informed of the toll for a toll road and the balance shortage of a debit account, so that the driver may prepare for a toll payment. For toll information, the toll information of the toll road stored together with map information at the setting of the route may be used, or the toll information may be obtained by communicating with a beacon or the like installed at the shoulder of the road.

### Brief Description of Drawings

Fig. 1 is a block diagram showing a complete vehicle navigation system.
Fig. 2 is a flow chart showing an example of operation at the setting of a destination.
Fig. 3 shows a route display example.
Fig. 4 shows an example of a selection screen.
Fig. 5 shows a display example of depositing being carried out.
Fig. 6 shows a display example when the route is changed.
Fig. 7 is a flow chart showing a processing at an exit.
Fig. 8 is a flow chart showing a guide operation for a course after passage through a gate.
Fig. 9 illustrates a sample system in operation.

### Best Mode for Carrying Out the Invention

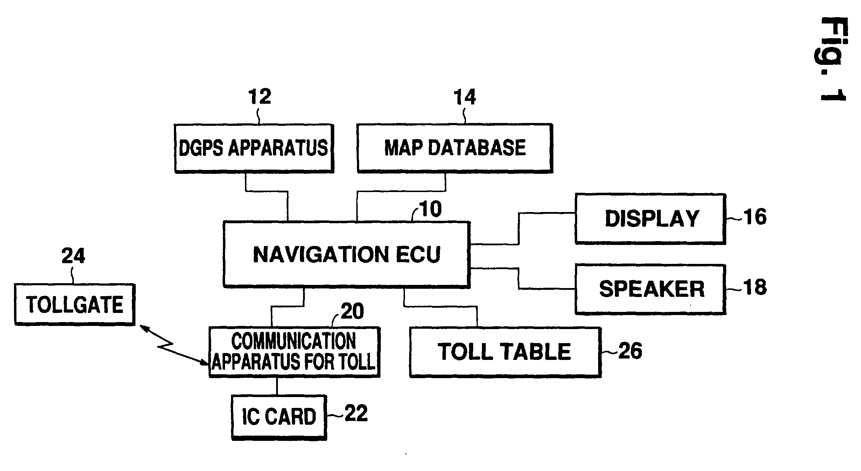

A suitable embodiment of the present invention (hereinafter referred to as "the embodiment") will be described with reference to the accompanying drawings. Fig. 1 is a block diagram showing a complete system. A navigation ECU 10 is connected to a DGPS (Differentia Global Positioning System) device 12 and a map database 14. The DGPS device 12 matches an error information in a GPS device supplied from an FM multiplex broadcasting or the like to position information from the GPS apparatus for utilizing a signal from an artificial satellite to detect a present position, whereby the more accurate detection of the present position can be carried out. Moreover, in the map database 14, map information including road information of the entire area is stored.

Furthermore, the navigation ECU 10 is connected to a display 16 and a speaker 18 as output devices. When a destination is set by the utilization of predetermined input means (not shown), the navigation ECU 10 uses the map information of the map database 14 to search and decide an optimum route to the destination. In addition, when a car is running, a map of the present position and its vicinity is displayed in the display 16, using a present position mark displayed on a map. Furthermore, the set route is displayed so as to distinguish it from other routes. When the car comes to an intersection where a right or left turn must be made, an enlarged guidance display showing the right turn or left turn at the intersection is created on the display 16, and an instruction for the right turn or left turn is given from the speaker 18.

In this embodiment, a toll communication apparatus 20 is connected to the navigation ECU 10, and an IC card 22 can be inserted into the toll communication apparatus 20. In the IC card 22, data regarding toll payment such as the number of a debit account and the balance of a prepaid card is stored. On the basis of the data regarding the toll payment from the IC card 22 and previously stored vehicle information (the distinction of an ordinary car, a large-sized car or the like), the toll communication apparatus 20 carries out necessary communication.

That is to say, a tollgate (an automatic tollgate) 24 can detect the car every running lane, and the toll communication apparatus 20 receives a transmitted signal from the tollgate 24 and then transmits predetermined data to the tollgate 24. The tollgate 24 checks the contents of the data transmitted from the toll communication apparatus 20, and carries out a processing such as a toll payment from the prepaid card or the payment from the debit account. A signal regarding collection data is further transmitted to the toll communication apparatus 20.

The navigation ECU 10 is connected to a toll table 26, and this navigation ECU 10 utilizes the toll table 26 to manage the balance of the prepaid card and the balance of the debit account.

The tollgate 24 may be allowed to function as a base station of the DGPS. That is to say, in the tollgate, GPS information may be obtained, and this information may be compared to an absolute value to generate the error information of the GPS and to supply the error information to the car. Furthermore, GPS error information obtained by another DGPS base station may be supplied to the car. Simultaneously with transmission and reception, DGPS information may be supplied to the car, or this information may be supplied thereto by the utilization of any other mean such as FM multiplex broadcasting.

### "Operation at the setting of the route"

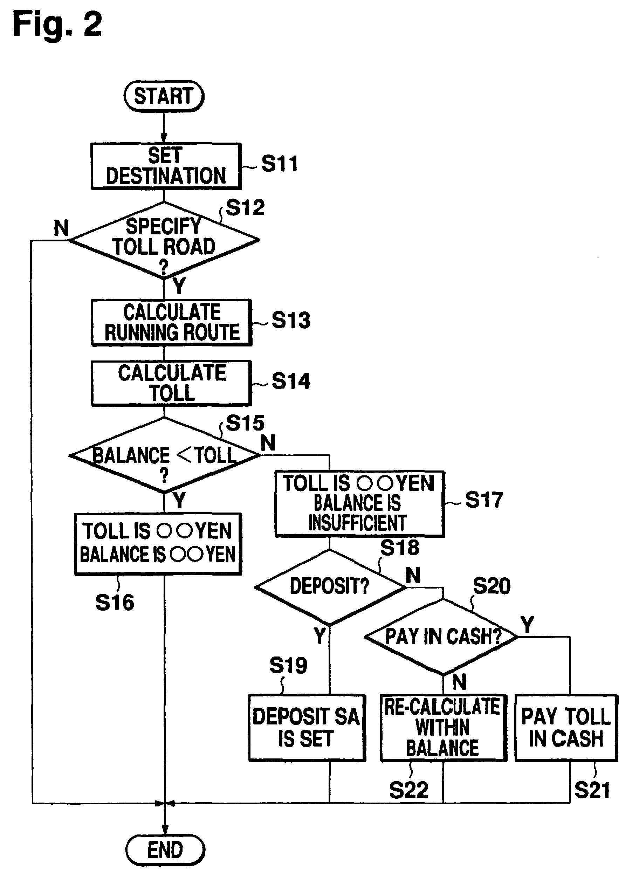

In this embodiment, the toll payment of a toll road is managed. The processing of the toll at the setting of the route will be described with reference to Fig. 2. First, a destination is set by a user (S11). When the destination has been set, it is judged whether or not utilization of the toll road is specified (S12). Since the search of the route to the destination depends largely on whether or not a toll road is to be utilized, the user is usually required to specify whether or not a toll road is to be utilized.

Next, a running route is calculated (S13). This is obtained by an optimizing calculation such as a Dijkstra method on the basis of the map data stored in the map database 14. Next, when the car runs along the obtained route, a necessary toll of the toll road is calculated (S14). This calculation is also carried out on the basis of the toll data stored in the map database 14.

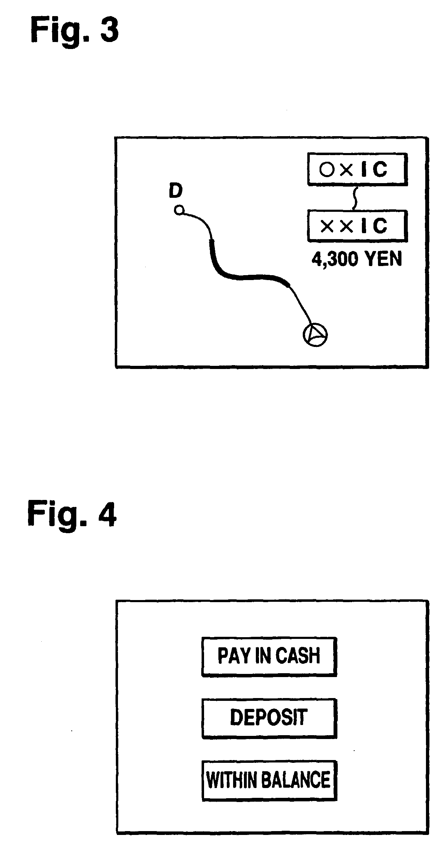

Next, it is judged whether or not the balance of the toll table 26 is larger than the obtained toll (S15). If the balance is larger than the toll, there is no problem. Accordingly, for example, a voice guide and a display such as "The toll is __ yen; your balance is __ yen." are carried out (S16), whereby the processing is completed. As shown in Fig. 3, the entire route and the toll road are displayed in the S16 (in Fig. 3, it is shown by a thick line). Furthermore, utilizable interchanges (__ IC to __ IC) of the toll road and the toll are also displayed.

On the other hand, when the balance is insufficient, for example, "The toll is __ yen, your balance is insufficient. Please supplement." is output (S17) in an S15 to urge depositing into the debit account. Next, an intention to deposit is confirmed by a driver (S18). For this confirmation, for example, a selection screen shown in Fig. 4 is displayed, and a selection on a screen touch is required.

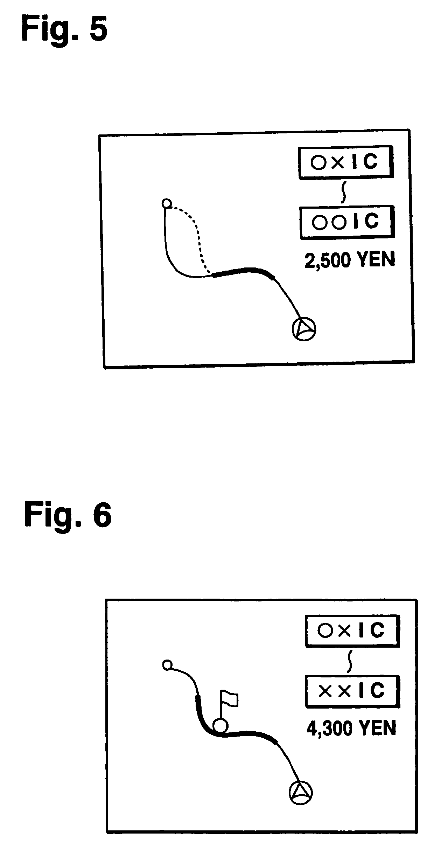

When the balance is supplemented, a route is decided containing, as a transitive place, a service area or the like where there is a place to make a deposit (S19). In case of a prepaid system, the balance of the IC card 22 is rewritten. Furthermore, a deposit balance is written in the IC card 22. For example, as shown in Fig. 5, a service area for depositing is displayed, and a message such as "A deposit can be made at
__ service area." is output. Next, the route will be guided on the assumption that the subsequent running proceeds via the shop.

On the other hand, if the driver does not wish to make a deposit, it is inquired in the S18 whether or not the toll is to be paid in cash (S20). When payment in cash is selected, the present route is decided (S21). Thus, by the subsequent route guide, the car is introduced to the gate of the cash payment in the tollgate. If cash payment is not selected in S20, a toll road is utilized only in a running section in which the car can be run with the available balance or less and the route is then recalculated to decide such a route (S22). Also in the display of this case, for example, as shown in Fig. 6, utilizable interchanges of the toll road are displayed.

As described above, in view of the toll payment of the toll road, the route to the destination can be set. Accordingly, at the tollgate, insufficient balance problems can be prevented.

### "Exit"

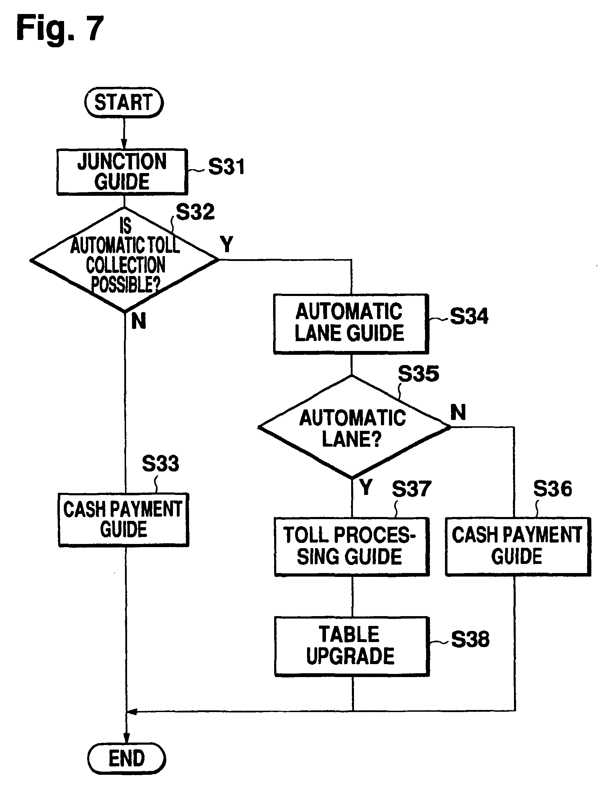

A processing at the exit will be described with reference to Fig. 7. First, when the car comes to a position 2 km before a junction of the tollgate, the guide of "__ interchange. Please branch off." is output (S31). Then, it is judged whether or not an automatic toll collection system is present at the tollgate (S32). This judgment is carried out using the data stored in the map database 14. If the automatic toll collection system is not present, the guide of the cash payment of "Automatic toll payment cannot be done at __ interchange. Cash payment is necessary." is carried out (S33).

On the other hand, when the automatic toll collection system is present at the tollgate in S32, an automatic toll payment lane position is guided (S34). For example, "Automatic payment is possible in the three right lanes." is guided. Next, it is judged whether or not the running lane is the automatic payment lane (S35). If it is not, a guide such as "This lane is for cash payment." is given to call an attention (S36). On the other hand, if the running lane is an automatic payment lane in S35, a massage regarding a payment processing is output (S37). For example, the message such as "The toll is __ yen, your balance is __yen." is output. Then, the contents of the toll table 26 is updated (S38). In this case, it is preferred that S34 is carried out 2 km before the junction, and the judgment in S35 is afterward carried out every 500 m, while S37 and S38 are carried out when the car has actually passed through the gate.

As described above, in this embodiment, the guide regarding the toll is carried out both at the setting of the destination and during the trip. The guide contents are those which are required on each occasion. Accordingly, the user can know the information regarding the toll and can also receive the guide during the actual running at a necessary timing. Specifically, when the car has approached the tollgate, the user can receive the guide of the lane on which the car should run to easily select the lane in accordance with a toll payment method.

### "Others"

The output of the above guide is basically a voice output from the speaker 18, but the output may be displayed in the display 16. Compared to a visual display, voice output enables the driver to pay more attention to driving, and hence voice output is preferable. Furthermore, a running lane position is basically specified by the DGPS apparatus 12, but the position may be specified by a radio wave beacon or communication with the tollgate. Moreover, when a communication apparatus for car lead or the like is installed, a radio wave from the communication apparatus may be received to detect the accurate lane position.

Furthermore, when the car does not have an automatic toll payment function, it is also preferred that the car is automatically led to the cash payment gate. That is to say, in the case that the car does not have the automatic toll payment function, when the approach of the car to the tollgate is detected by the navigation apparatus carried on the car, it is preferred that a guide such as a lane change is carried out so as to lead the car to the cash payment gate, and the guide of the toll or the like is carried out.

### "Guide in consideration of the destination after passage through the gate"

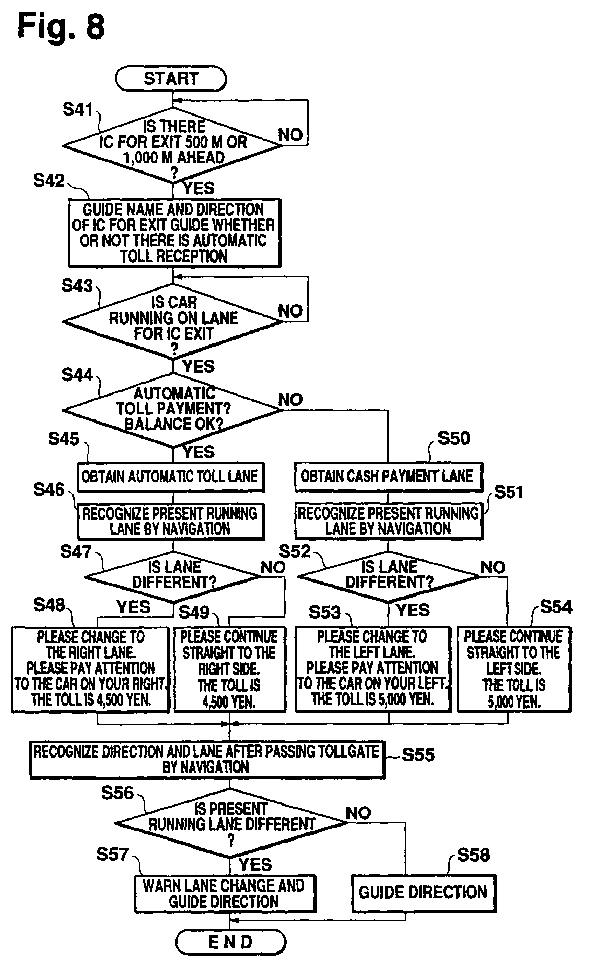

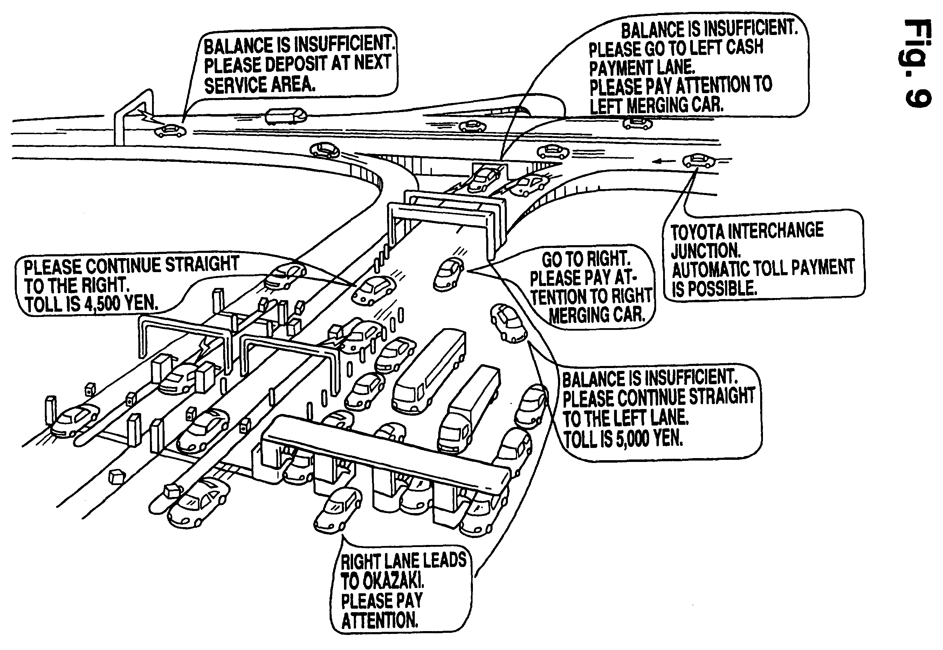

Next, a processing in the case of passing through a tollgate where automatic toll payment can be carried out during the running to the destination of the set route will be described with reference to a flow chart shown in Fig. 8 and the illustrative view shown in Fig. 9.

First, it is judged whether or not there is, 500 m or 1000 m ahead, an interchange (IC) for exiting from the toll road on which the car is now running (S41). If the judgment is NO, then processing is unnecessary. Until the judgment becomes YES, this judgment is repeated. In S41, if the judgment is YES, a name and a direction of the interchange for exiting from the toll road are guided, and a possibility of the automatic toll payment is guide (S42). For example, as shown in Fig. 9, a voice message such as "Toyota interchange junction. Automatic toll payment is possible." is output. Then, it is confirmed whether or not the car is actually running on an exit lane (S43), and when the car is running on the exit lane, it is judged whether or not the car can carry out an automatic toll payment and whether the balance of the debit account or the prepaid card is sufficient (S44).

If this judgment is YES, the car is led in order to carry out automatic toll receipt. First, the position of the automatic toll lane is obtained (S45). In order to obtain the position of this automatic toll lane, data in the map database 14 carried on the car can be utilized, or alternatively, the position can also be obtained from the information from the beacon installed before the tollgate. Next, the lane position where the car is now running is detected (S46). The detection of the present position must be detected to the lane position, and must be accurate. Thus, the accurate position is detected on the basis of the DGPS information. In this connection, if a magnetic marker is embedded, preferably, it is also preferred that this marker is detected.

Then, on the basis of the lane position detected in the S45 and S46, it is judged whether or not the lane position is different, that is to say, whether or not the car is running on the lane which is not an automatic toll lane (S47). If this judgment is YES, it is necessary to change lanes for automatic toll payment. In this example, the automatic toll payment lane is the right lane. Hence, a guide such as "Please change to the right lane. Please pay attention to the car on your right. The toll is 4,500 yen." is output (S48). On the other hand, the judgment in the S47 is NO, the car is positioned at the automatic toll payment lane, and so it is not necessary to change the lane. Therefore, a guide such as "Please go straight as it is. The toll is 4,500 yen." is output (S49).

On the other hand, if the judgment in the S44 is NO, automatic toll payment is not possible and a guide for cash toll payment is carried out. Thus, the position of the cash payment lane is first obtained (S50) and the present running lane is then recognized (S51). The lane recognition is carried out in the same method as in the S45 and S46. It is judged whether or not the lane is different (S52). If the lane is different, the guide of the lane change and the guide of the toll are carried out (S53), and if not, the guide of the continuation of the present running and the guide of the toll are carried out in the same manner as the above case (S54).

As described above, when the guide in S48, S49, S53 or S54 is completed, a running direction after passing the tollgate and the lane are recognized (S55) on the basis of the set route. Then, the recognized lane is compared to the present lane (S56). In this judgment, if the recognized lane is different from the present lane, a warning of lane change and a direction guide are given (S57). For example, when the route to the destination is directed to Toyota and the car must be running the left lane, "Left is for Toyota. Please pay attention to the car on your left." is guided. On the other hand, when the lanes are matched to each other in the S56, only the guide of the direction is output (S58). For example, a guide such as "Right is for Okazaki." is output.

As described above, according to this embodiment, not only the guide regarding the toll payment lane but also the guide including the subsequent running direction can be carried out. Accordingly, after the passage through the tollgate, the user can easily select a correct lane.

Fig. 9 shows an illustrative view of a system in operation. As shown herein, during running on a main line of the toll road, when a shortage of the account balance is detected by the communication with a road beacon, a guide such as "The balance is insufficient. Please deposit at next service area." for depositing to the account is output. Furthermore, as described above, when the car has approached to the exit to be used, the tollgate guide, the lane guide of the cash payment and the automatic payment, the guide of the running direction after the passage through the tollgate, and the like are carried out.

The present invention can be used with the navigation apparatus carried on the car. When the automatic tollgate is present, the guide can be carried out in consideration of the existence of the automatic tollgate.

## Claims

1. A vehicle navigation apparatus for outputting a running direction guide regarding a guide point when the vehicle has approached the guide point where such a guide is necessary, said vehicle navigation apparatus comprising
detecting means for detecting an approach to an automatic tollgate, and
guide contents of the running direction guide are changed in accordance with an approach to the automatic tollgate.

2. The vehicle navigation apparatus according to Claim 1 wherein
the running direction guide is changed in accordance with whether or not automatic toll processing at the automatic tollgate can be applied to the vehicle.

3. The vehicle navigation apparatus according to Claim 1 or 2 wherein
when the automatic tollgate and a nonautomatic tollgate are adjacently arranged, the direction or position of the tollgate suitable for the vehicle is guided in accordance with whether or not automatic toll processing at the automatic tollgate can be applied to that vehicle.

4. The vehicle navigation apparatus according to Claim 1 or 2 which comprises
an automatic toll apparatus applicable to the automatic toll processing at the automatic tollgate, and
toll guide output means for outputting a toll guide necessary for the toll processing,
the toll guide being changed in accordance with an approach to the automatic tollgate.

5. The vehicle navigation apparatus according to Claim 4 which comprises
voice navigation means for carrying out a voice guide including a scheduled running route of the vehicle and the running direction of the vehicle,
toll processing information from the automatic toll equipment being output from the voice navigation means.

6. The vehicle navigation apparatus according to any one of Claims 1 to 5 wherein the guide including the running direction after a passage through the automatic tollgate is output.
